# EUROPÄISCHE PATENTSCHRIFT

(11) **EP 1 567 805 B1**
(45) Veröffentlichungstag und Bekanntmachung des Hinweises auf die Patenterteilung: **09.07.2008**
(21) Anmeldenummer: 03750338.0
(22) Anmeldetag: 11.09.2003
(51) Int. Cl.: F23D 11/38, F23D 11/12, F23D 11/24

(54) **ZERST UBUNGSANORDNUNG**
SPRAYING SYSTEM
SYSTEME DE PULVERISATION

(30) Priorität: 07.11.2002 DE 10251869
(43) Veröffentlichungstag der Anmeldung: 31.08.2005
(73) Patentinhaber: ROBERT BOSCH GMBH, 70442 Stuttgart (DE)
(72) Erfinder: MILLER, Frank, 74360 Ilsfeld (DE); ALBRODT, Hartmut, 71732 Tamm (DE)
(74) Vertreter: Körfer, Thomas
(86) Internationale Anmeldenummer: PCT/DE2003/003012
(87) Internationale Veröffentlichungsnummer: WO 2004/042277

(56) Entgegenhaltungen:
- EP-A- 0 085 445
- CH-A- 212 264
- GB-A- 1 268 512
- US-A- 1 062 714
- US-A- 2 359 690
- US-A- 2 466 182
- US-A- 3 142 306
- US-A- 3 913 845
- US-A- 5 342 592

## Beschreibung

### Stand der Technik

Die Erfindung geht aus von einer Zerstäubungsanordnung nach der Gattung des Hauptanspruchs.

Bei brennstoffzellengestützten Transportsystemen kommen zur Gewinnung des benötigten Wasserstoffs aus kohlenwasserstoffhaltigen Kraftstoffen sog. chemische Reformer zum Einsatz.

Alle vom Reformer zum Reaktionsablauf benötigten Stoffe wie z.B. Luft, Wasser und Kraftstoff werden idealerweise dem Reformer in gasförmigem Zustand zugeführt. Da aber die Kraftstoffe, wie z.B. Methanol oder Benzin, und Wasser an Bord des Transportsystems vorzugsweise in flüssiger Form vorliegen, müssen sie erst, kurz bevor sie dem Reformer zugeführt werden, erhitzt werden, um sie zu verdampfen. Dies erfordert einen Vorverdampfer, der in der Lage ist, die entsprechenden Mengen an gasförmigem Kraftstoff und Wasserdampf zur Verfügung zu stellen.

Da der Wasserstoff zumeist sofort verbraucht wird, müssen die chemischen Reformer in der Lage sein, die Produktion von Wasserstoff verzögerungsfrei, z.B. bei Lastwechseln oder Startphasen, an die Nachfrage anzupassen. Insbesondere in der Kaltstartphase müssen zusätzliche Maßnahmen ergriffen werden, da der Reformer keine Abwärme bereitstellt. Konventionelle Verdampfer sind nicht in der Lage die entsprechenden Mengen an gasförmigen Reaktanden verzögerungsfrei zu erzeugen.

Es ist daher sinnvoll, den Kraftstoff durch eine Zerstäubungseinrichtung in feinverteilter Form in den Reformer einzubringen, wobei, bei ausreichendem Wärmeangebot, der Verdampfungsprozeß durch die hohe Oberfläche des feinverteilten Kraftstoffs verbessert wird.

Beispielsweise sind aus der US 3,971,847 Vorrichtungen zur Eindosierung von Kraftstoffen in Reformer bekannt. Der Kraftstoff wird hier von vom Reformer relativ weit entfernten Zumeßeinrichtungen über lange Zuführungsleitungen und eine einfache Düse in einen temperierten Stoffstrom zugemessen. Dabei trifft der Kraftstoff zuerst auf Prallbleche, die nach der Austrittsöffnung der Düse angeordnet sind, welche eine Verwirbelung und Verteilung des Kraftstoffs bewirkten sollen, und gelangt dann über eine relativ lange Verdampfungsstrecke, welche für den Verdampfungsprozeß notwendig ist, in den Reaktionsbereich des Reformers. Durch die lange Zuführungsleitung kann die Zumeßeinrichtung von thermischen Einflüssen des Reformers isoliert werden.

Nachteilig bei den aus der obengenannten Druckschrift bekannten Vorrichtungen ist insbesondere, daß durch die einfache Konstruktion der Düse und die Anordnung der Prallbleche eine gezielte Eindosierung von Kraftstoff, beispielsweise in Bereiche des Reformers mit großem Wärmeangebot, nur unzureichend möglich ist. Dies führt zu einem relativ großen Raumbedarf durch die Notwendigkeit einer langen und voluminösen Verdampfungsstrecke.

Außerdem ergeben sich im Kaltstartbetrieb Probleme, da sich lange und voluminöse Verdampfungsstrecken nur langsam aufheizen und zudem relativ viel Wärme ungenutzt abgeben.

Durch die in der US 3,971,847 offenbarten Anordnungen von Düse und Prallblechen ist es insbesondere nicht möglich, eine Hohlzylinderinnenfläche gleichmäßig mit Kraftstoff zu benetzen, dabei bestimmte Flächen des Hohlzylinders von der Benetzung mit Kraftstoff auszunehmen oder die Menge des eindosierten Kraftstoffs der Verteilung des Wärmeangebots im Zumeßraum anzupassen. Auch die Form der durch den Zumeßvorgang entstehenden Kraftstoffwolke kann nur unzureichend beeinflußt werden.

Ferner ist aus US 2,466,182 eine Zerstäubungsanordnung gemäß dem Oberbegriff des Anspruchs 1 bekannt, die geeignet ist kraftstoff zu zerstäuben.

### Vorteile der Erfindung

Die erfindungsgemäße Zerstäubungsanordnung mit den Merkmalen des Hauptanspruchs hat demgegenüber den Vorteil, daß durch eine zumindest stückweise Verringerung des Innendurchmessers des Zerstäubungsrohres der Zerstäubungsanordnung und durch die Unterteilung des Zerstäubungsrohrs in zumindest einen ersten Abschnitt und einen zweiten Abschnitt, deren Aussendurchmesser und/oder Wandstärke verschieden sind, der Kraftstoff entsprechend dem im Zumeßraum herrschenden Wärmeangebot und der Geometrie des Zumeßraumes fein zerstäubt und homogen verteilt eingebracht werden kann.

Ferner sind Bohrunggen gemäß dem kennzeichnenden Teil des Anspruchs 1 zur Verbesserung der Zerstäubung angeordnet.

Durch die in den Unteransprüchen aufgeführten Maßnahmen sind vorteilhafte Weiterentwicklungen der im Hauptanspruch angegebenen Zerstäubungsanordnung möglich.

Vorteilhafterweise ist das Zerstäubungsrohr dabei in zwei Abschnitte unterteilt, deren erster einen größeren und deren zweiter einen geringeren Innendurchmesser aufweist, wobei der Abschnitt mit dem geringeren Innendurchmesser abströmseitig des Abschnitts mit dem größeren Innendurchmesser angeordnet ist.

Eine weitere vorteilhafte Ausführungsform sieht eine weitere Unterteilung des zweiten Abschnitts in Bereiche mit reduziertem Innendurchmesser vor, welche mit Bereichen mit größerem Innendurchmesser abwechseln.

Die Kombination des sich verjüngenden Innendurchmessers mit dem in Abströmrichtung ansteigenden Bohrungsdurchmesser ist dabei besonders vorteilhaft.

### Zeichnung

Ausführungsbeispiele der Erfindung sind in der Zeichnung vereinfacht dargestellt und in der nachfolgenden Beschreibung näher erläutert. Es zeigen:
- Fig. 1: eine prinzipielle schematische Darstellung einer für die Anwendung der erfindungsgemäßen Maßnahmen geeigneten Zerstäubungsanordnung in einer Gesamtansicht;
- Fig. 2A: eine schematische Darstellung eines ersten Ausführungsbeispiels einer erfindungsgemäßen Zerstäubungsanordnung; und
- Fig. 2B: eine schematische Darstellung eines zweiten Ausführungsbeispiels einer erfindungsgemäßen Zerstäubungsanordnung.

### Beschreibung der Ausführungsbeispiele

Nachfolgend werden Ausführungsbeispiele der Erfindung unter Bezugnahme auf die Zeichnung beispielhaft beschrieben.

Die nachfolgend beschriebenen Ausführungsbeispiele einer erfindungsgemäß ausgestalteten Zerstäuberanordnung 1 ermöglichen eine einfache Dosierung und Zerstäubung in heißer Atmosphäre bei robuster Konstruktion, Anwendung in unterschiedlichen räumlichen Konstellationen und Einsatz von Standard-Niederdruck-Brennstoffeinspritzventilen. Die erfindungsgemäßen Zerstäubungsanordnungen 1 eignen sich insbesondere zum Eintrag, und zur Zerstäubung von Kraftstoff in einen nicht dargestellten chemischen Reformer zur Gewinnung von Wasserstoff.

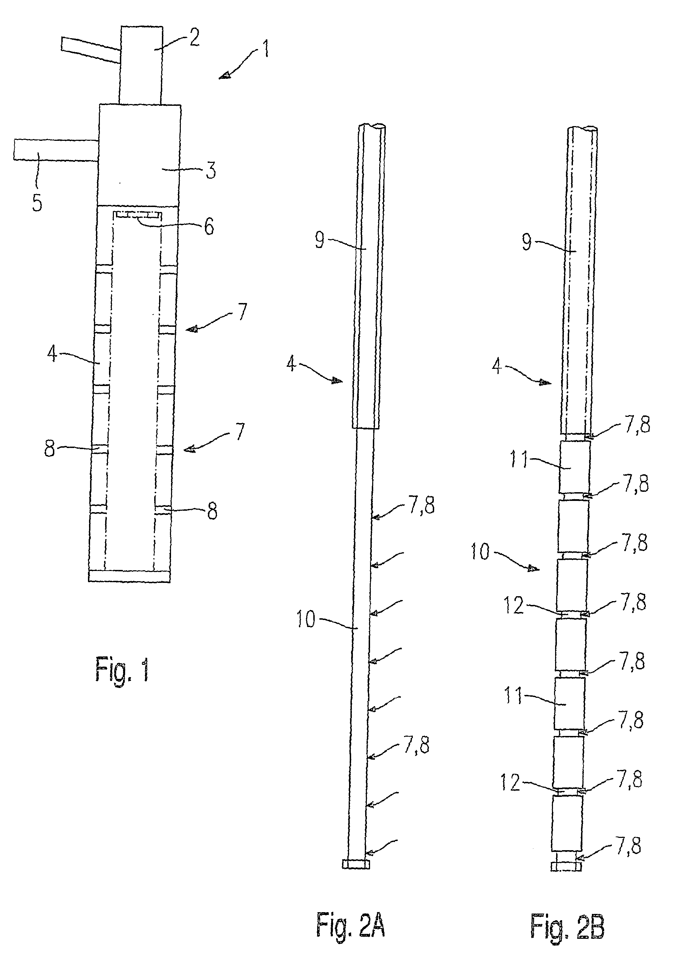

Fig. 1 zeigt eine Prinzipskizze einer für die Anwendung der erfindungsgemäßen Maßnahmen geeigneten Zerstäubungsanordnung 1. Die Zerstäubungsanordnung 1 umfaßt ein Brennstoffeinspritzventil 2, welches mittels einer Verschraubung bzw. eines Adapters 3 oder eines geeigneten Verfahrens wie z. B. Schweißen oder Löten mit einem Zerstäubungsrohr 4 verbunden ist. An der Verschraubung bzw. dem Adapter 3 kann eine Luftzufuhr 5 vorgesehen sein, welche Luft in den Kraftstoffstrahl, der durch das Brennstoffeinspritzventil 2 abgespritzt wird, einbringt. Über zumindest eine Zumeßöffnung 6 wird das Kraftstoff-Luft-Gemisch in das Zerstäubungsrohr 4 zugemessen.

Das Zerstäubungsrohr 4 weist auf verschiedenen Ebenen 7 Bohrungen 8 auf, durch welche das Kraftstoff-Luft-Gemisch zerstäubt und in weitere Komponenten des Reformers geleitet wird. Die besondere Anordnung der Bohrungen 8 sowie deren Wirkung ist in der Beschreibung zu den Fig. 2A und 2B näher beschrieben.

Fig. 2A zeigt in einer stark schematisierten, ausschnittsweisen Darstellung den abströmseitigen Teil eines erfindungsgemäß ausgestalteten Zerstäubungsrohres 4 einer Zerstäubungsanordnung 1. Aus Fig. 2A ist ersichtlich, daß sich das Zerstäubungsrohr 4 in Abströmrichtung verjüngt. Das Zerstäubungsrohr 4 umfaßt dabei einen ersten Abschnitt 9, welcher einen größeren Durchmesser, insbesondere einen größeren Außendurchmesser, aufweist als ein zweiter Abschnitt 10. In dem zweiten Abschnitt 10 sind auf mehreren, durch Pfeile gekennzeichneten Ebenen 7 jeweils mehrere Bohrungen 8 zum Zerstäuben des Kraftstoff-Luft-Gemisches vorgesehen.

Durch die Verkleinerung des Außendurchmessers des Zerstäubungsrohrs 4 im Bereich der Bohrungen 8 kann die Wandstärke des Zerstäubungsrohres 4 stark reduziert werden. Somit werden Durchmesser/Längenverhältnisse erreicht, die deutlich größer als 1 sind und somit die Zerstäubung und Aufweitung des Strahls entscheidend verbessern.

Fig. 2B zeigt ein weiteres Ausführungsbeispiel für ein mit den erfindungsgemäßen Maßnahmen versehenes Zerstäubungsrohr 4. Hier ist der Außendurchmesser des Zerstäubungsrohres 4 nicht über die gesamte Länge des zweiten Abschnitts 10 gegenüber dem ersten Abschnitt 9 verringert, sondern jeweils nur im Bereich der auf den verschiedenen Ebenen 7 angeordneten Bohrungen 8. Dementsprechend ist der zweite Abschnitt 10 in mehrere Teilbereiche 11 und 12 untergliedert, in denen der Außendurchmesser des Zerstäubungsrohres 4 abwechselnd zu- und wieder abnimmt.

Als Verfahren zum Reduzieren des Außendurchmessers des Zerstäubungsrohres 4 bieten sich beispielsweise Drehen, Schleifen oder Erodieren an.

Für eine gute Zerstäubung bei möglichst geringem Luftbedarf sind für die Bohrungen 8 Durchmesser von ca. 100 µm bis 250 µm anzustreben. Wird zwischen dem Durchmesser und der Länge der Bohrungen 8 ein bevorzugtes Verhältnis von ≥ 1 angenommen, ergibt sich die Wandstärke des Zerstäubungsrohres 4 zu ca. 0,1 bis 0,25 mm.

Ferner sind auch die Bohrungen 8 bezüglich ihrer Durchmesser so ausgelegt, daß eine Verjüngung des Zerstäubungsrohres 4 entfallen kann. Hierbei nehmen die Durchmesser der Bohrungen 8 in jeder in Abströmrichtung folgenden Ebene 7 zu. Die Anzahl der Ebenen 7 sowie der Bohrungen 8 pro Ebene 7 können beliebig den Anforderungen an das Zerstäubungsbild angepaßt werden.

Die Erfindung ist nicht auf die beschriebenen Ausführungsbeispiele beschränkt und ist für beliebige andere Zerstäubungsanordnungen 1 anwendbar.

## Patentansprüche

1. Zerstäubungsanordnung (1) für Kraftstoffe, insbesondere zum Eintrag in einen chemischen Reformer zur Gewinnung von Wasserstoff, mit einem Brennstoffeinspritzventil (2), einem Zerstäubungsrohr (4), einer Luftzufuhr (5) und zumindest einer Zumeßöffnung (6),
wobei das Zerstäubungsrohr (4) zumindest einen ersten Abschnitt (9) und einen zweiten Abschnitt (10) aufweist, deren Außendurchmesser und/oder deren Wandstärke verschieden sind,
wobei der Innendurchmesser des Zerstäubungsrohres (4) zumindest stückweise verringert ist,
wobei in einem Bereich (12) des zweiten Abschnitts (10) mehrere, auf verschiedenen Ebenen angeordnete Bohrungen (8), durch welche das Kraftstoff-Luft-Gemisch zerstäubt wird, ausgebildet sind
**dadurch gekennzeichnet, daß** die Durchmesser der Bohrungen (8) in einer Abströmrichtung zunehmen.

2. Zerstäubungsanordnung nach Anspruch 1,
**dadurch gekennzeichnet,**
**daß** der Innendurchmesser des ersten Abschnitts (9) größer ist als der Innendurchmesser des zweiten Abschnitts (10).

3. Zerstäubungsanordnung nach Anspruch 1 oder 2,
**dadurch gekennzeichnet,**
**daß** der zweite Abschnitt (10) abströmseitig des ersten Abschnitts (9) ausgebildet ist.

4. Zerstäubungsanordnung nach Anspruch 3,
**dadurch gekennzeichnet,**
**daß** in dem zweiten Abschnitt (10) auf mehreren Ebenen (7) jeweils mehrere Bohrungen (8) ausgebildet sind.

5. Zerstäubungsanordnung nach Anspruch 4,
**dadurch gekennzeichnet,**
**daß** der zweite Abschnitt (10) in mehrere Bereiche (11, 12) aufgeteilt ist.

6. Zerstäubungsanordnung nach Anspruch 5,
**dadurch gekennzeichnet,**
**daß** der Außendurchmesser des Zerstäubungsrohres (4) in ersten Bereichen (11) größer als in zweiten Bereichen (12) ist.

7. Zerstäubungsanordnung nach Anspruch 6,
**dadurch gekennzeichnet,**
**daß** die zweiten Bereiche (12) mit den Ebenen (7) zusammenfallen.

8. Zerstäubungsanordnung nach Anspruch 7,
**dadurch gekennzeichnet,**
**daß** in den zweiten Bereichen (12) jeweils mehrere Bohrungen (8) ausgebildet sind.

9. Zerstäubungsanordnung nach Ansprch 3,
**dadurch gekennzeichnet,**
**daß** die Wandstärke des ersten Abschnitts (9) und des zweiten Abschnitts (10) gleich groß ist.

10. Zerstäubungsanordnung nach einem der Ansprüche 1 bis 9,
**dadurch gekennzeichnet,**
**daß** die Außenbearbeitung des Zerstäubungsrohres (4) mittels Drehens, Schleifens oder Erodierens erfolgt.

11. Zerstäubungsanordnung nach einem der Ansprüche 1 bis 10,
**dadurch gekennzeichnet,**
**daß** der Durchmesser der Bohrungen (8) etwa 100 µm bis 250 µm beträgt.

12. Zerstäubungsanordnung nach Anspruch 11,
**dadurch gekennzeichnet,**
**daß** das Verhältnis zwischen dem Durchmesser und der Länge der Bohrungen (8) größer oder gleich 1 ist.

## Claims

1. Atomizing arrangement (1) for fuels, in particular for introduction into a chemical reformer for obtaining hydrogen, with a fuel injection valve (2), an atomizing tube (4), an air supply (5) and at least one metering orifice (6), the atomizing tube (4) having at least one first portion (9) and one second portion (10), the outside diameters of which and/or the wall thicknesses of which are different, the inside diameter of the atomizing tube (4) being at least piecewise reduced, there being formed in a region (12) of the second portion (10) a plurality of bores (8) which are arranged at different levels and by means of which the fuel/air mixture is atomized, **characterized in that** the diameters of the bores (8) increase in an outflow direction.

2. Atomizing arrangement according to Claim 1, **characterized in that** the inside diameter of the first portion (9) is larger than the inside diameter of the second portion (10).

3. Atomizing arrangement according to Claim 1 or 2, **characterized in that** the second portion (10) is formed on the outflow side of the first portion (9)

4. Atomizing arrangement according to Claim 3, **characterized in that** a plurality of bores (8) are formed in each case at a plurality of levels (7) in the second portion (10).

5. Atomizing arrangement according to Claim 4, **characterized in that** the second portion (10) is divided into a plurality of regions (11, 12).

6. Atomizing arrangement according to Claim 5, **characterized in that** the outside diameter of the atomizing tube (4) is larger in first regions (11) than in second regions (12).

7. Atomizing arrangement according to Claim 6, **characterized in that** the second regions (12) coincide with the levels (7).

8. Atomizing arrangement according to Claim 7, **characterized in that** a plurality of bores (8) are formed in each case in the second regions (12).

9. Atomizing arrangement according to Claim 3, **characterized in that** the wall thickness of the first portion (9) and of the second portion (10) is of identical size.

10. Atomizing arrangement according to one of Claims 1 to 9, **characterized in that** the external machining of the atomizing tube (4) takes place by means of turning, grinding or erosion.

11. Atomizing arrangement according to one of Claims 1 to 10, **characterized in that** the diameter of the bores (8) is about 100 µm to 250 µm.

12. Atomizing arrangement according to Claim 11, **characterized in that** the ratio between the diameter and the length of the bores (8) is greater than or equal to 1.

## Revendications

1. Dispositif de pulvérisation (1) pour des carburants notamment pour leur introduction dans un réformeur chimique pour obtenir de l'hydrogène, comportant un injecteur (2), un tube de pulvérisation (4), une alimentation en air (5) et au moins un orifice de dosage (6),
le tube de pulvérisation (4) ayant au moins un premier segment (9) et un second segment (10), dont les diamètres extérieurs et/ou les épaisseurs de paroi sont différents,
le diamètre intérieur du tube de pulvérisation (4) étant diminué au moins par segment,
au moins dans une zone (12) du second segment (10), il y a plusieurs perçages (8) répartis dans plusieurs plans par lesquels on pulvérise le mélange air/carburant,
**caractérisé en ce que**
le diamètre des perçages (8) augmente dans le sens de l'écoulement.

2. Dispositif de pulvérisation selon la revendication 1,
**caractérisé en ce que**
le diamètre intérieur du premier segment (9) est supérieur au diamètre intérieur du second segment (10).

3. Dispositif de pulvérisation selon l'une des revendications 1 ou 2,
**caractérisé en ce que**
le second segment (10) est réalisé du côté de la sortie du premier segment (9).

4. Dispositif de pulvérisation selon la revendication 3,
**caractérisé en ce que**
plusieurs perçages (8) sont réalisés sur plusieurs plans (7) dans le second segment (10).

5. Dispositif de pulvérisation selon la revendication 4,
**caractérisé en ce que**
le second segment (6) est divisé en plusieurs zones (11, 12).

6. Dispositif de pulvérisation selon la revendication 5,
**caractérisé en ce que**
le diamètre extérieur du tube de pulvérisation (4) dans les premières zones (11) est supérieur à celui dans les secondes zones (12).

7. Dispositif de pulvérisation selon la revendication 4,
**caractérisé en ce que**
les secondes zones (12) coïncident avec les plans (7).

8. Dispositif de pulvérisation selon la revendication 7,
**caractérisé en ce que**
plusieurs perçages (8) sont réalisés respectivement dans les secondes zones (12).

9. Dispositif de pulvérisation selon la revendication 3,
**caractérisé en ce que**
les épaisseurs de paroi du premier segment (9) et du second segment (10) sont identiques.

10. Dispositif de pulvérisation selon l'une des revendications 1 à 9,
**caractérisé en ce que**
l'usinage extérieur du tube de pulvérisation (4) est réalisé par un usinage avec un tour, par meulage ou par érosion.

11. Dispositif de pulvérisation selon l'une des revendications 1 à 10,
**caractérisé en ce que**
le diamètre des perçages (8) est compris entre environ 100 µm et 250 µm.

12. Dispositif de pulvérisation selon la revendication 11,
**caractérisé en ce que**
le rapport entre le diamètre et la longueur des perçages (8) est supérieur ou égal à 1.
